# EUROPEAN PATENT APPLICATION

(11) **EP 1 892 507 A1**
(43) Date of publication of application: **27.02.2008**
(21) Application number: 06746743.1
(22) Date of filing: 23.05.2006
(51) Int. Cl.: G01J 1/02, G01M 11/00

(54) **METHOD AND APPARATUS FOR MEASURING BRIGHTNESS OF LIGHT EMITTING BODY**

(30) Priority: 23.05.2005 JP 2005150241
(71) Applicant: Availvs Corporation, Tokyo 102-0085 (JP)
(72) Inventor: SAITO, Kenichiro, Kisarazu-shi, Chiba 2920043 (JP); SAKAI, Mieko c/o Availvs Corporation, Tokyo 1020085 (JP)
(74) Representative: Neath, Susannah Mairi
(86) International application number: PCT/JP2006/310259
(87) International publication number: WO 2006/126544

(57) **Abstract**

A method for measuring the luminance of a light-emitting object having a surface which has a definite area and which emits a low-intensity light and a device therefore, wherein a light-receiving surface of an optical sensor is brought into direct contact with the surface of the light-emitting object to measure the luminance thereof. As the optical sensor, a semiconductor sensor panel or a solar panel is preferably used. The luminance of a light-emitting object which emits a low-intensity light can be measured simply, easily and properly without a darkroom and without a means such as a light condensing lens system which is complicated and difficult to use.

## Description

### TECHNICAL FIELD

The present invention relates to a method for measuring the luminance of a light-emitting object and a device therefor.

### BACKGROUND ART

In a conventional luminance measuring method, the light emitted from a light-emitting surface of a light-emitting object is passed through an aperture of a light shielding plate or the like and condensed by a lens or the like on a light-receiving surface of a luminance meter.

However, the above conventional luminance measuring method and device have the following problems.
(1) When the light emitted from the light-emitting object has a low intensity of one to a few candelas, it is difficult to measure the luminance of the light-emitting object. To measure the luminance of such a light-emitting object, there is no choice but to condense the light with a lens in a darkroom.
   Therefore, the measurement imposes a large burden on the operator.
(2) In general, the light-emitting object and the optical receiver are spaced by a predetermined distance. This is because a condensing lens must be placed between the light-emitting object and the optical receiver. It is considered that the lower the intensity of the light from the light-emitting object, the more essential it is to condense the light by means of a lens. However, an optical system having such a light condensing system using a lens is complicated and difficult to operate.

### DISCLOSURE OF INVENTION

The present invention has been made to solve the above problems, and it is, therefore, an object of the present invention to provide a technical means by which even the luminance of a light-emitting object which emits low-intensity light can be measured simply, easily and properly without a darkroom and without a conventional means such as a light condensing lens system which is complicated and difficult to use.

In accomplishing the above objects, there is provided in accordance with a first aspect of the present invention a method for measuring the luminance of a light-emitting object having a surface which has a definite area and which emits a low-intensity light, comprising bringing a light-receiving surface of an optical sensor into direct contact with the surface of the light-emitting object to measure the luminance thereof.

In a second aspect, the present invention provides the method of the first aspect, wherein the optical sensor comprises a semiconductor sensor panel.

In a third aspect, the present invention provides the method of the first aspect, wherein the optical sensor comprises a solar panel.

In a fourth aspect, the present invention provides the method of any one of the first to third aspects, wherein the light-receiving surface of the optical sensor has the same or substantially the same area as the surface of the light-emitting object.

In a fifth aspect, the present invention provides the method of any one of the first to fourth aspects, wherein the luminance measurement is performed while preventing entrance of ambient light into the light-receiving surface of the optical sensor by disposing a light shielding member with the light-receiving surface of the optical sensor been in direct contact with the surface of the light-emitting object

In a sixth aspect, the present invention provides the method of any one of the first to fifth aspects, wherein the luminance measurement is performed in one of operation modes selected from a normal measurement mode comprising measuring the luminance of said light-emitting object t predetermined sampling intervals, and displaying the measurement values; an automatic measurement and record mode comprising measuring the luminance of said light-emitting object automatically and sequentially at arbitrarily selected sampling intervals, and storing the measurement data; and a predictive measurement mode comprising collecting and storing luminance data of a plurality of reference objects in advance, measuring the luminance of said light-emitting object for a predetermined period of time to obtain a measurement data, and determining a predictive data from the measurement data based on the stored luminance data of that reference object which is the same as or similar to said light-emitting object.

A seventh aspect of the present invention provides a device for measuring the luminance of a light-emitting object having a surface which has a definite area and which emits a low-intensity light, comprising an optical sensor having a light-receiving surface configured to be brought into direct optical contact with surface of the light-emitting object to measure the luminance thereof.

In an eighth aspect, the present the device of the seventh aspect, wherein the optical sensor comprises a semiconductor sensor panel.

In a ninth aspect, the present invention provides the device of the seventh aspect, wherein the optical sensor comprises a solar panel.

In a tenth aspect, the present invention provides the device of any one of the seventh to ninth aspects, wherein the light-receiving surface of the optical sensor has the same or substantially the same area as the surface of the light-emitting object.

In an eleventh aspect, the present invention provides the device of any one of the seventh to tenth aspects, further comprising a light shielding member for preventing entrance of ambient light into the light-receiving surface of the optical sensor configured to be brought into direct contact with the surface of the light-emitting object.

In a twelfth aspect, the present invention provides the device of any one of the seventh to eleventh aspects, further comprising a processing section for performing signal processing of the luminance detected by the optical sensor; a storage section for storing luminance measurement data processed in the processing section; and a display section for displaying measured luminance values.

In a thirteenth aspect, the present invention provides the device of the twelfth aspect, wherein said processing section is operable so that the luminance measurement is performed in one of operation modes selected from a normal measurement mode comprising measuring the luminance of said light-emitting object at predetermined sampling intervals, and displaying the measurement values; an automatic measurement and record mode comprising measuring the luminance of said light-emitting object automatically and sequentially at arbitrarily selected sampling intervals, and storing the measurement data; and a predictive measurement mode comprising collecting and storing luminance data of a plurality of reference objects in advance, measuring the luminance of said light-emitting object for a predetermined period of time to obtain a measurement data, and determining a predictive data from the measurement data based on the stored luminance data of that reference object which is the same as or similar to said light-emitting object.

### BRIEF DESCRIPTION OF THE DRAWINGS

FIG 1 is a schematic view illustrating the basic configuration of a luminance measuring device according to the present invention.
FIG. 2(a) and FIG. 2(b) are a side cross-sectional view and a rear view, respectively, schematically illustrating an example of measurement by the measuring device according to the present invention in which the light- emitting object to be measured is a phosphorescent plate.
FIG. 3(a), FIG. 3(b), FIG 3(c) and FIG. 3(d) are a front view, a side view, a rear view and a bottom view, respectively, illustrating an embodiment of a luminance measuring device according to the present invention.
FIG 4 is a graph showing an example of luminance measurement data obtained by the device shown in FIG4 3.

### BEST MODE FOR CARRYING OUT THE INVENTION

Description will be hereinafter made of an embodiment of the present invention.

The method according to the present invention is a method for measuring the luminance of a light-emitting object having a surface which has a definite area and which emits a low-intensity light, and is characterized in that a light-receiving surface of an optical sensor is brought into direct contact with the surface of the light-emitting object to measure the luminance thereof.

In the method according to the present invention, the light emitted from the light-emitting object is received by an optical sensor and converted into an electrical signal, and the luminance of the light-emitting object is determined by measuring the generated electric power.

In the method according to the present invention, contact measurement is performed. Thus, diffusion and convergence of light do not occur, and there is therefore no need to use a light condensing lens system as in conventional devices. Therefore, the measuring device can be decreased in size.

As the optical sensor, a semiconductor sensor panel or a solar panel can be suitably used. There are various semiconductor sensor panels and solar panels such as panels using single crystalline, polycrystalline, amorphous or hybrid silicon or other materials, but any panel may be used as long as the received light can be effectively converted into an electrical signal and the generated electric power can be measured with high accuracy.

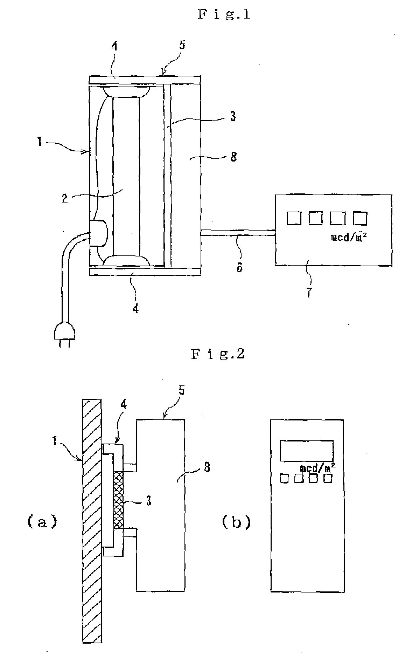

FIG. 1 illustrates the general configuration of a device for measuring the luminance of a light-emitting object according to the present invention. Designated as 1 is a light-emitting object in which a light source 2 such as a light bulb, a fluorescent lamp, LED or an EL element is disposed. Other examples of the light-emitting object 1 include luminescent panels, such as "emergency exit" signs, attached to a room wall and advertising signs. Also included are phosphorescent plastics and stones which store light during the day and glow in the dark.

An optical receiver 5 has a semiconductor sensor panel or solar panel 3 having a flat light-receiving surface. Although the size of the light-receiving surface may be selected arbitrarily, it is preferably approximately 30 mm × 30 mm, and approximately 100 mm × 100 mm at maximum, for example.

It is desirable that a low-intensity light from the light-emitting object 1 can be received by the optical receiver 5 having a light-receiving surface with a size approximately the same as (approximately 100 to 120 % of) that of the light-emitting surface of the light-emitting object 1.

The optical receiver 5 has a support plate 8 for supporting the semiconductor sensor panel or solar panel 3, and hoods 4 at both ends thereof for preventing ambient light from entering the semiconductor sensor panel or solar panel 3.

When light of a suitable energy enters a semiconductor, pairs of electrons and holes are generated by interaction between the light and the lattice of the semiconductor. When there is a p-n junction in the semiconductor, the electrons and the holes diffuse in the N-type semiconductor and the P-type semiconductor, respectively, and then gather on opposite electrodes. When both the electrodes are connected electrically, a current flows between them and electric power is generated.

Here, when light from the light-emitting object 1 enters the semiconductor sensor panel or solar panel 3 attached to the optical receiver 5, an electromotive force is generated. The electromotive force is subjected to A/D conversion and displayed in candelas. A display unit 7 is connected to the semiconductor sensor panel or solar panel 3 by an electric cable 6. The reading may be shown in an analogue form. A meter or an LED buzzer may be used instead of the display unit 7. Although the luminance measurement result is shown in candelas (cd/m²) here, it may be shown in millicandelas (mcd/m²) depending on the measuring object.

FIG 2(a) and FIG. 2(b) are a side cross-sectional view and a rear view, respectively, schematically illustrating an example of measurement by the measuring device according to the present invention in which the light- emitting object to be measured is a phosphorescent plate. In FIG- 2, the same parts as those in FIG 1 are designated by the same reference numerals. Here, the luminance measurement result is displayed in millicandelas (mcd/m²).

The present invention will be described in detail with reference to a more specific example.

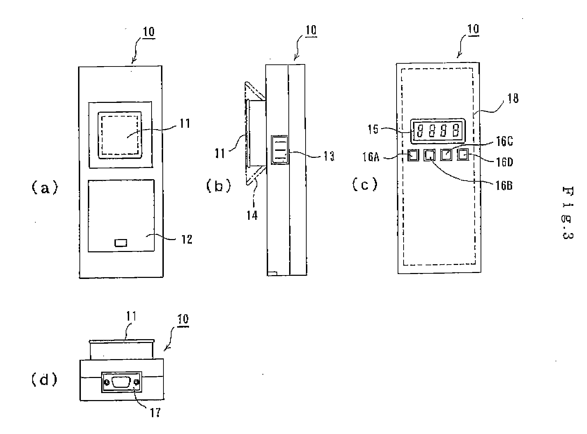

FIG 3(a), FIG. 3(b), FIG. 3(c) and FIG 3(d) are a front view, a side view, a rear view and a bottom view, respectively, illustrating an embodiment of a luminance measuring device according to the present invention.

A luminance measuring device 10 of this example has a sensor light-receiving part 11 using a semiconductor sensor panel or solar panel, and a battery housing section 12 for housing a power source battery (three size AA (UM3) batteries, in this example) formed below the sensor light-receiving part 11. As shown in FIG 3(b), the sensor light-receiving part 11 protrudes forward. A power switch 13 is provided on one side face of the luminance measuring device 10. A light-shielding hood 14 is provided around the sensor light-receiving part 11 for more accurate luminance measurement.

As shown in FIG. 3(c), a display section 15 and switches 16A to 16D are provided in the back face of the luminance measuring device 10. In this example, four seven-segment digits are used in the display section 15, and LED illuminated switches are used for the switches 16A to 16D. In addition, a communication connector 17 is provided in the bottom face of the luminance measuring device 10 so that the luminance measuring device 10 can be connected to a printer or personal computer (not shown).

A control board 18 having a processing section and a storage section is provided in the body of the luminance measuring device 10. The processing section measures the value of the electromotive force generated in the sensor light-receiving part 11, digitizes the measurement value, and displays it on the display section 15 in a digital form. The processing unit fetches the current generated in the sensor light-receiving part 11 by the received light, converts the current into a voltage, performs signal processing to obtain the value of luminance, and displays it on the display section 15 in a digital form. Also, the processing section records the luminance value in association with the measurement time in the storage section, and performs the functions of controlling the luminance measurement operation of the luminance measuring device 10. In particular, the luminance measuring device 10 performs the luminance measurement in one of the following three operation modes in the illustrated embodiment.
(1) Normal measurement mode in which the luminance of the light-emitting object is measured reguarly at sampling intervals set by default and the measurement values are displayed on the display section 15.
(2) Automatic measurement and record mode in which the luminance of the light-emitting object is measured automatically and sequentially at arbitrarily selected sampling intervals and the measurement data are stored in the storage section.
(3) Predictive measurement mode in which luminance data of a plurality of reference objects are collected and stored in the storage section in advance. The luminance of the light-emitting object is measured for a predetermined period of time to obtain a measurement data. Then, a predictive value is determined within a short period of time from the measurement data based on the stored luminance data of the reference object which is the same as or similar to the light-emitting object.

The functions in each mode and the selection of the mode can be made with the switches 16A to 16D.

The switches 16A to 16D have the following indications.
16A: Measure/Hold
16B: Predict/Result
16C: Auto Record/Print
16D: Record/Readout

The specifications of an actually produced luminance measuring device are shown below. It is to be understood that they are illustrative only and do not in any way limit the present invention.
Detector: amorphous silicon semiconductor panel (optical sensor)
Measuring area: 30 mm × 30 mm (square)
Unit of measure: mcd/m²
Measurable range: 0 to 1000 mcd/m²
Accuracy: ±4%
Temperature stability: ±3% (with respect to the value at 23°C)
Humidity stability: ± 3 % (with respect to the value at 60 RH)
Operating temperature: 5°C to 40°C
Operating humidity: 85% RH
Continuous use: approximately 20 hours (when UM3 alkaline dry cells are used)
Maximum number of records to be stored: 240
Display: four seven-segment digits
Power source: DC 4.5V (UM3 alkaline dry cell × 3)
Size: W65 × H160 × D40 mm (excluding projections)
Weight: approximately 200 g (excluding batteries)

The procedure of luminance measurement with the luminance measuring device 10 will be next described.

The power switch 13 is turned on. At this time, "0000" (default setting) is displayed on the display section 15 if no light is detected, and "OVER" is displayed if light with an intensity over the measurable range is detected. If light with an intensity within the measurable range is detected, the luminance value of the light source is displayed. The light-receiving surface of the sensor light-receiving part 11 is brought into contact with the light-emitting surface of a light-emitting object as a measuring object (not shown), and the light-shielding hood 14 is brought into close contact with the body of the luminance measuring device 10 to shield the ambient light. Then, the switches 16A to 16D are operated to select a measurement mode, and measurement is performed.

To carry out luminance measurement in the normal measurement mode, the switch 16A is operated to the "Measure" position. Then, a corresponding LED is turned on. For example, the luminance is measured at one second intervals, and the measurement values are displayed sequentially on the display section 15. When the luminance measurement is completed and the switch 16A is operated to the "Hold" position, the corresponding LED is turned off. Then, when the switch 16C is operated to the "Print" position, printing is carried out. The printing is available when a printer (not shown) is connected to the communication connector 17. When the switch 16D is operated to the "Readout" position, the contents in the storage section (memory) are displayed on the display section 15. For example, the memory number is displayed as left-aligned for one second, and then the recorded measurement value is displayed. When the switch 16D is pressed again, the next memory number is displayed and then the corresponding measurement value is displayed.

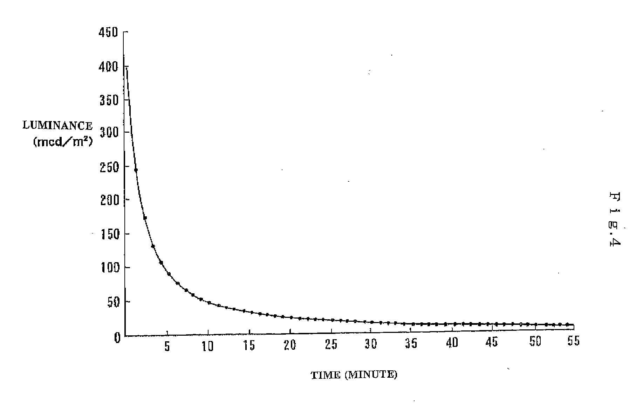

An example of the result of luminance measurement performed in the normal measurement mode is shown in FIG 4.

To carry out luminance measurement in the automatic measurement and record mode, the switch 16C is operated to the "Auto record" position. Then, a corresponding LED is turned on and the luminance measuring device is switched to a mode in which a measurement value is recorded in the storage section at regular intervals. Immediately after the switch 16C is pressed, the sampling interval is set to one minute and '1' is displayed on the display section 15. When the switch 16C is pressed once again within one minute, '2' is displayed on the display section 15 and the sampling interval is set to two minutes. By repeating the above process, the sampling interval can be arbitrarily set.

To carry out luminance measurement in the predictive measurement mode, the switch 16B is operated to the "Predict" position. Then, a corresponding LED is turned on and measurement is performed for, for example, at least four minutes. The obtained data are compared with data stored in the storage section to predict or estimate predictive data value over a longer period of time from the result of measurement for a short period of time. As the method for determining a data predictive value for a longer period of time from the data for a short period of time, any well-known method can be used.

While the present invention has been described based on concrete examples, it is to be understood that the present invention is not limited to the above embodiment and specific examples and various changes and modifications can be made thereto.

## Claims

1. A method for measuring the luminance of a light-emitting object having a surface which has a definite area and which emits a low-intensity light, comprising bringing a light-receiving surface of an optical sensor into direct contact with said surface of said light-emitting object to measure the luminance thereof.

2. The method for measuring the luminance of a light-emitting object according to claim 1, wherein said optical sensor comprises a semiconductor sensor panel.

3. The method for measuring the luminance of a light-emitting object according to claim 1, wherein said optical sensor comprises a solar panel.

4. The method for measuring the luminance of a light-emitting object according to any one of claims 1 to 3, wherein said light-receiving surface of said optical sensor has the same or substantially the same area as said surface of said light-emitting object.

5. The method for measuring the luminance of a light-emitting object according to any one of claims 1 to 4, wherein the luminance measurement is performed while preventing entrance of ambient light into said light-receiving surface of said optical sensor by disposing a light shielding member with said light-receiving surface of said optical sensor been in direct contact with said surface of said light-emitting object.

6. The method for measuring the luminance of a light-emitting object according to any one of claims I to 5, wherein the luminance measurement is performed in one of operation modes selected from a normal measurement mode comprising measuring the luminance of said light-emitting object at predetermined sampling intervals, and displaying the measurement values; an automatic measurement and record mode comprising measuring the luminance of said light-emitting object automatically and sequentially at arbitrarily selected sampling intervals, and storing the measurement data; and a predictive measurement mode comprising collecting and storing luminance data of a plurality of reference objects in advance, measuring the luminance of said light-emitting object for a predetermined period of time to obtain a measurement data, and determining a predictive data from the measurement data based on the stored luminance data of that reference object which is the same as or similar to said light-emitting object.

7. A device for measuring the luminance of a light-emitting object having a surface which has a definite area and which emits a low-intensity light, comprising an optical sensor having a light-receiving surface configured to be brought into direct contact with said surface of said light-emitting object to measure the luminance thereof.

8. The device for measuring the luminance of a light-emitting object according to claim 7, wherein said optical sensor comprises a semiconductor sensor panel.

9. The device for measuring the luminance of a light-emitting object according to claim 7, wherein said optical sensor comprises a solar panel.

10. The device for measuring the luminance of a light-emitting object according to any one of claims 7 to 9, wherein said light-receiving surface of said optical sensor has the same or substantially the same area as said surface of said light-emitting object.

11. The device for measuring the luminance of a light-emitting object according to any one of claims 7 to 10, further comprising a light shielding member for preventing entrance of ambient light into said light-receiving surface of said optical sensor configured to be brought into direct contact with said surface of said light-emitting object.

12. The device for measuring the luminance of a light-emitting object according to any one of claims 7 to 11, further comprising a processing section for performing signal processing of the luminance detected by said optical sensor; a storage section for storing luminance measurement data processed in said processing section; and a display section for displaying measured luminance values.

13. The device for measuring the luminance of a light-emitting object according to claim 12, wherein said processing section is operable so that the luminance measurement is performed in one of operation modes selected from a normal measurement mode comprising measuring the luminance of said light-emitting object at predetermined sampling intervals, and displaying the measurement values; an automatic measurement and record mode comprising measuring the luminance of said light-emitting object automatically and sequentially at arbitrarily selected sampling intervals, and storing the measurement data; and a predictive measurement mode comprising collecting and storing luminance data of a plurality of reference objects in advance, measuring the luminance of said light-emitting object for a predetermined period of time to obtain a measurement data, and determining a predictive data from the measurement data based on the stored luminance data of that reference object which is the same as or similar to said light-emitting object.
